# FASCICULE DE BREVET EUROPEEN

(11) **EP 4 419 821 B1**
(45) Date de publication et mention de la délivrance du brevet: **16.07.2025**
(21) Numéro de dépôt: 22798077.8
(22) Date de dépôt: 28.09.2022
(51) Int. Cl.: F16K 5/04, F16K 11/085

(54) **VANNE À BOISSEAU**
KÜKENVENTIL
PLUG VALVE

(30) Priorité: 20.10.2021 FR 2111115
(43) Date de publication de la demande: 28.08.2024
(73) Titulaire: Sogefi Air & Cooling, 78280 Guyancourt (FR)
(72) Inventeur: DI SCIULLO, Bruno, 67600 Ebersheim (FR); JACQUET, Nicolas, 68240 Kaysersberg Vignoble (FR); BALGA, Vincent, 68540 Bollwiller (FR)
(74) Mandataire: Ipsilon Strasbourg
(86) Numéro de dépôt international: PCT/EP2022/077043
(87) Numéro de publication internationale: WO 2023/066631

(56) Documents cités:
- CN-B- 106 286 900
- JP-B2- 6 317 080
- US-A1- 2019 346 064
- US-A1- 2021 033 200

## Description

La présente invention se rapporte au domaine des mécanismes de vannes à boisseau et plus particulièrement aux mécanismes d'étanchéification de vannes à boisseau. Des exemples de vannes à boisseau sont connus par les documents US 2021/033200 A1, US 2019/346064 A1 et CN 106 286 900 B.

Les vannes à boisseau reposent sur une construction structurelle sensiblement cylindrique positionnée en travers d'un orifice d'entrée et d'un orifice de sortie. Cette construction fait intervenir une pièce cylindrique à section circulaire traversée par un conduit pour la circulation d'un fluide, cette pièce cylindrique étant insérée dans un logement de forme sensiblement complémentaire à l'intérieur duquel la pièce cylindrique est montée pivotante axialement. Le pivotement est alors arrangé pour aligner le conduit traversant de la pièce cylindrique avec les orifices d'entrée et de sortie de la vanne.

Les vannes ont vocation à autoriser ou bloquer la circulation d'un fluide au travers d'un circuit. Aussi, pour que le fonctionnement d'une vanne s'effectue de façon optimisée en gérant efficacement la circulation du fluide qui la traverse, il est indispensable que le fonctionnement de cette vanne soit parfaitement étanche tant pour éviter tout passage lorsqu'elle est en position fermée que pour empêcher toute perte de flux lorsqu'elle est en position ouverte. Dans les vannes à boisseau, la forme cylindrique et la surface courbée du boisseau apportent une contrainte supplémentaire dans la gestion de l'étanchéité entre la surface du boisseau et chacun des orifices d'entrée et de sortie de la vanne. En effet, une parfaite complémentarité de surface entre le boisseau et les orifices est complexe à réaliser, notamment en raison des jeux susceptibles d'exister entre les surfaces des pièces intérieures de la vanne.

Pour faire face à ce problème, une solution consiste à positionner un joint circulaire, par exemple un joint torique, au niveau de chacune des ouvertures intérieures des orifices de la vanne, de sorte que ces joints se positionnent en compression entre la surface du boisseau et la surface périphérique d'une ouverture intérieure d'un orifice. Toutefois, une telle solution rencontre rapidement ses limites. En effet, le déplacement en frottement de la surface courbée du boisseau contre le joint d'étanchéité conduit à une usure du joint voire à sa déformation au niveau de sa surface de jonction avec le boisseau, de sorte que le joint est susceptible de faire apparaître une perte de la qualité de son étanchéité.

La présente invention a pour but de pallier ces inconvénients en proposant une vanne à boisseau qui soit en mesure d'assurer le maintien d'une étanchéité efficace dans son fonctionnement au cours du temps, tout en présentant une conception facile à mettre en œuvre.

L'invention a ainsi pour objet une vanne à boisseau caractérisée en ce que la vanne comprend au moins :
- un corps de vanne comprenant un volume intérieur associé à au moins deux orifices de communication avec des conduits respectifs,
- un boisseau cylindrique de section circulaire, le boisseau comprenant au moins un circuit traversant entre au moins deux orifices portés par la surface périphérique du boisseau, au moins deux orifices du boisseau étant disposés sur la surface périphérique pour être aptes à être positionnés simultanément en vis-à-vis d'orifices de communication respectifs du corps de vanne,
- un élément intermédiaire comprenant au moins deux orifices traversants entre deux surfaces opposées, intérieure et extérieure, les orifices traversants étant en vis-à-vis d'orifices de communication respectifs du corps de vanne, la surface extérieure de l'élément intermédiaire étant configurée pour être positionnée en vis-à-vis du volume intérieur du corps de vanne, la surface intérieure portant au moins un relief entourant un orifice traversant étant configurée de sorte que le sommet du relief réalise autour de l'orifice au moins une surface de contact continue en appui contre la surface périphérique du boisseau,
- un joint d'étanchéité positionné en compression au niveau d'un orifice entre l'élément intermédiaire et le corps de vanne.

L'invention sera mieux comprise, grâce à la description ci-après, qui se rapporte à différents modes de réalisation préférés, donnés à titre d'exemple non limitatifs, et expliqués avec référence aux dessins schématiques annexés, lesquels :

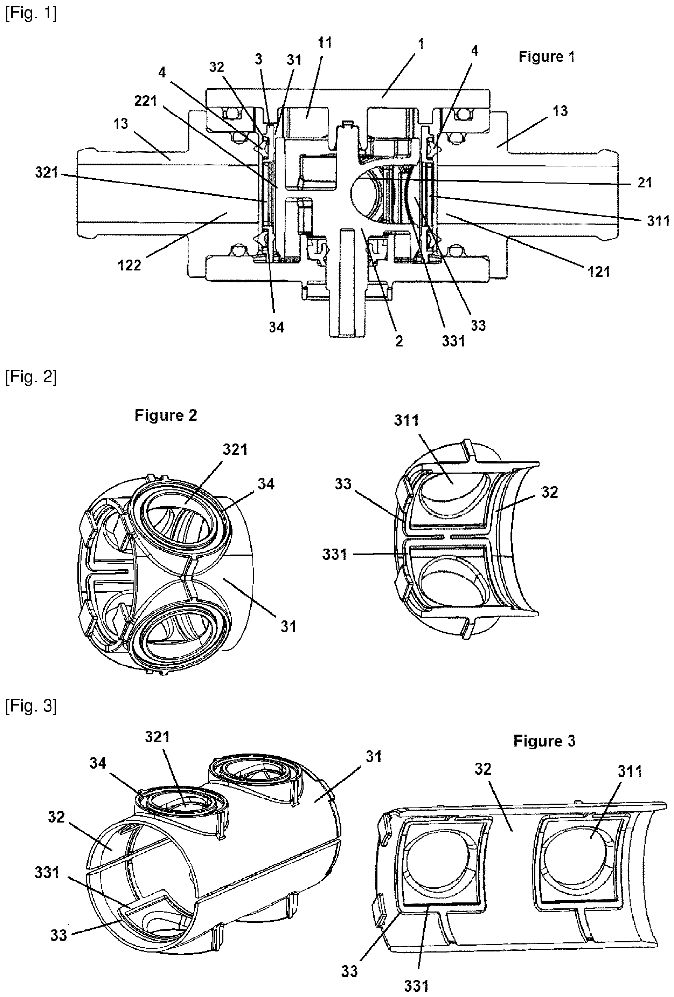

[Fig. 1] illustre une représentation schématique en section d'un exemple de vanne à boisseau selon l'invention,
[Fig. 2] illustre une représentation schématique d'un premier exemple d'élément intermédiaire pour vanne à boisseau selon l'invention,
[Fig. 3] illustre une représentation schématique d'un deuxième exemple d'élément intermédiaire pour vanne à boisseau selon l'invention,

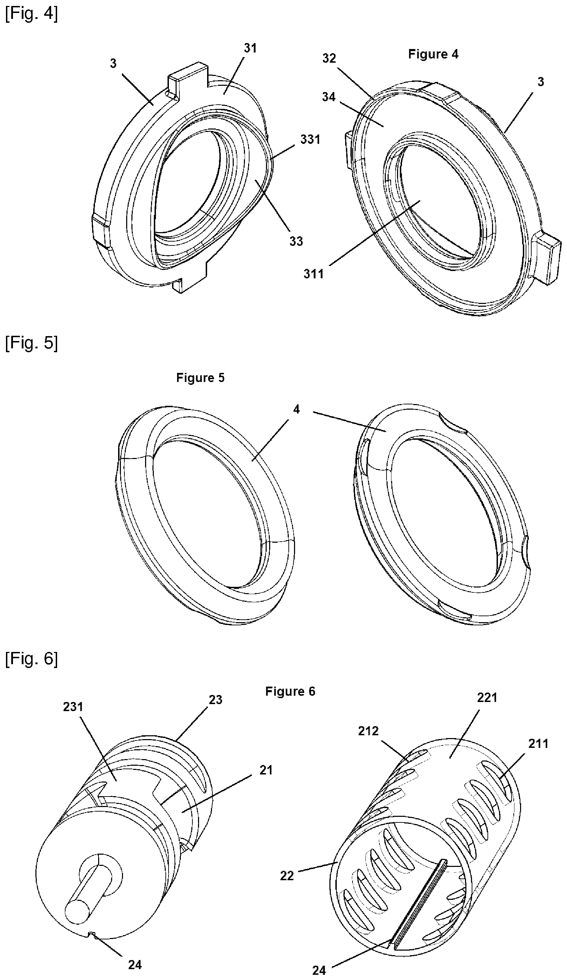

[Fig. 4] illustre une représentation schématique d'un troisième exemple d'élément intermédiaire pour vanne à boisseau selon l'invention,
[Fig. 5] illustre une représentation schématique d'un exemple de joint d'étanchéité pour vanne à boisseau selon l'invention,
[Fig. 6] illustre une représentation schématique de différentes parties d'un exemple de boisseau cylindrique pour vanne à boisseau selon l'invention,

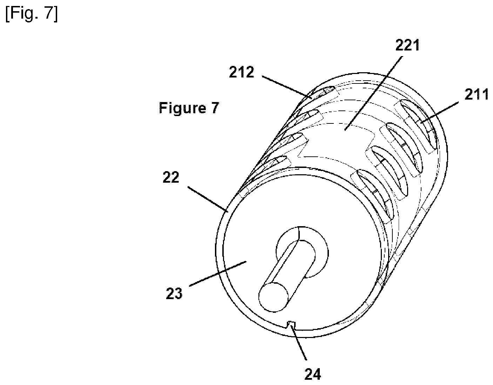

[Fig. 7] illustre une représentation schématique d'un exemple de boisseau cylindrique pour vanne à boisseau selon l'invention.

L'invention concerne une vanne à boisseau caractérisée en ce que la vanne comprend au moins :
- un corps 1 de vanne comprenant un volume intérieur 11 associé à au moins deux orifices 121, 122 de communication avec des conduits respectifs 13,
- un boisseau 2 cylindrique de section circulaire, le boisseau 2 comprenant au moins un circuit 21 traversant entre au moins deux orifices 211, 212 portés par la surface périphérique 221 du boisseau 2, au moins deux orifices 211, 212 du boisseau 2 étant disposés sur la surface périphérique 221 pour être aptes à être positionnés simultanément en vis-à-vis d'orifices 121, 122 de communication respectifs du corps 1 de vanne,
- un élément intermédiaire 3 comprenant au moins deux orifices 311, 321 traversants entre deux surfaces opposées, intérieure 32 et extérieure 31, les orifices 311, 321 traversants étant en vis-à-vis d'orifices 121, 122 de communication respectifs du corps 1 de vanne, la surface extérieure 31 de l'élément intermédiaire 3 étant configurée pour être positionnée en vis-à-vis du volume intérieur 11 du corps 1 de vanne, la surface intérieure 32 portant au moins un relief 33 entourant un orifice 321 traversant étant configurée de sorte que le sommet du relief 33 réalise autour de l'orifice 321 au moins une surface de contact 331 continue en appui contre la surface périphérique 221 du boisseau 2,
- un joint d'étanchéité 4 positionné en compression au niveau d'un orifice entre l'élément intermédiaire 3 et le corps 1 de vanne.

La vanne à boisseau selon l'invention opère une jonction étanche entre le boisseau 2 et le corps 1 de vanne qui repose, d'une part, sur une jonction en frottement de la surface de contact 331 de l'élément intermédiaire 3 contre la surface périphérique 221 du boisseau 2 et, d'autre part, sur une jonction élastique réalisée par le joint d'étanchéité 4 entre l'élément intermédiaire 3 et le corps 1 de vanne. La vanne à boisseau selon l'invention est ainsi en mesure de tirer avantage des propriétés élastiques du joint d'étanchéité 4 sans que celui-ci ne supporte un contact direct avec le frottement contre la surface périphérique 221 du boisseau 2. La jonction en frottement d'une surface de contact 331 de l'élément intermédiaire 3 contre la surface périphérique 221 du boisseau 2 fait ainsi intervenir un contact entre deux surfaces rigides, de sorte qu'aucun risque de déformation n'est à prévoir au cours du fonctionnement de la vanne à boisseau de l'invention. L'étanchéité entre un orifice 121, 122 du boisseau 2 et l'un des orifices 121, 122 de communication du corps 1 de vanne est ainsi réalisée, d'une part, par le joint d'étanchéité 4 qui réalise un anneau autour de l'alignement des orifices traversants respectifs entre la face extérieure 31 de l'élément intermédiaire 3 et le corps 1 de vanne et, d'autre part, par la continuité de la surface de contact 331 en appui contre la surface périphérique 221 du boisseau 2. Une surface de contact 331 de l'élément intermédiaire 3 est ainsi arrangée de façon à former un anneau autour de l'un des orifices 211, 212 portés par la surface périphérique 221 du boisseau 2, de façon à étanchéifier l'ensemble formée par les volumes intérieurs de l'orifice 311, 321 de l'élément intermédiaire 3 et de l'orifice 211, 212 du boisseau 2 par rapport aux autres volumes et espaces susceptibles d'exister entre l'élément intermédiaire 3 et le boisseau 2.

Dans le cadre de la vanne de l'invention, l'élément intermédiaire 3 est monté à l'intérieur du corps 1 de vanne pour être bloqué en rotation avec celui-ci, de sorte que l'élément intermédiaire 3 est fixe par rapport au boisseau 2 arrangé pivotant axialement à l'intérieur du corps 1 de vanne. Par ailleurs, une fois en position à l'intérieur du corps 12 de vanne, cet élément intermédiaire 3 est également bloqué en translation avec le corps 1 de vanne. A titre d'exemple préféré, ce blocage de l'élément intermédiaire 3 dans le corps 1 de vanne fait intervenir des formes tridimensionnelles portées par la surface extérieure 31 qui sont sensiblement complémentaires à celles de la surface intérieure du corps 12 de vanne située au niveau d'au moins l'un des orifices 121, 122. Le blocage en position de l'élément intermédiaire 3 à l'intérieur du corps 1 de vanne fait également intervenir un effort exercé par le boisseau 2 contre la surface intérieure 32 de l'élément intermédiaire 3. Ce blocage de l'élément intermédiaire 3 est ainsi effectué par compression de cet élément intermédiaire 3 entre, d'une part, le joint d'étanchéité 4 qui réalise une jonction élastique déformable avec l'intérieur du corps 1 de vanne et, d'autre part, le boisseau 2. Le joint d'étanchéité 4 réalise une structure élastique dans l'épaisseur de cette compression pour supprimer tout jeu qui serait susceptible d'exister entre les différentes pièces de la vanne et notamment dans le pincement de l'élément intermédiaire 3 par le boisseau 2 et le corps 1 de vanne.

Il convient de relever que, dans le cadre de la vanne de l'invention, le corps 1 de vanne est réalisé en au moins deux parties qui assemblées ensemble réalisent une coquille à l'intérieur de laquelle les différents éléments de la vanne se trouvent logés. Selon un premier exemple de construction, les deux parties du corps 1 de vanne sont réalisées sous la forme de deux moitiés sensiblement similaires du corps 1 de vanne. Chacune de ces moitiés du corps 1 de vanne comprend un ou plusieurs logements spécifiquement configurés pour recevoir un ou plusieurs des différents éléments positionnés à l'intérieur de la vanne. Ces différents logements intégrés à chacune des moitiés du corps 1 de vanne sont également arrangées pour coopérer entre eux pour définir les différents volumes intérieurs lors de la réunion des deux moitiés du corps 1 de vanne. Selon un second exemple de construction, les deux parties du corps 1 de vanne sont réalisées de sorte qu'une première partie réalise un logement à l'intérieur duquel chacun des différents éléments de la vanne, sinon la majorité de ces éléments, est inséré. La seconde partie réalise alors une structure de cloisonnement du logement formé par la première partie pour y bloquer les différents éléments constitutifs de la vanne.

Selon un exemple correspondant à une variante de construction de l'invention, la vanne comprend un élément intermédiaire 3 structurellement réalisé en une ou plusieurs parties coopérant entre elles et configurées pour réaliser un arrangement qui entoure la surface périphérique 221 cylindrique du boisseau 2. Selon cette variante de construction, ces parties de l'élément intermédiaire 3 coopèrent entre elles pour réaliser un arrangement définissant un volume à l'intérieur duquel le boisseau 2 est positionné et maintenu axialement en position. L'élément intermédiaire 3 porte, au niveau de sa surface intérieure 32, une ou plusieurs surfaces de contact 331 qui sont configurées pour être intégralement en appui contre la surface périphérique 221 du boisseau 2. Aussi, ces différentes surfaces de contact 331 de l'élément intermédiaire 3 réalisent des interfaces support qui participent au positionnement axial du boisseau 2 à l'intérieur du corps 1 de la vanne. Ce volume défini par les surfaces de contact 331 et à l'intérieur duquel le boisseau 2 est positionné, présente une forme cylindrique de section sensiblement circulaire. Un tel arrangement cylindrique de section sensiblement circulaire porté par les surfaces intérieures 32 des éléments intermédiaires 3 est également disposé de façon coaxiale avec l'axe de pivotement du boisseau 2, de façon à ne pas perturber, d'une part, la rotation du boisseau 2 par rapport à la surface intérieure 32 des éléments intermédiaires 3 qui définissent le logement ce boisseau 2 et, d'autre part, le positionnement des orifices 211, 212 de ce boisseau 2 en vis-à-vis d'orifices 311, 321 traversants portés par des éléments intermédiaires 3.

Selon un exemple correspondant à une variante de construction spécifique de la variante précédemment détaillée, la vanne comprend un élément intermédiaire 3 réalisé en deux parties arrangées de sorte que chacune des parties de l'élément intermédiaire 3 recouvre une moitié respective de la surface périphérique 221 cylindrique du boisseau 2. Selon cette variante de construction, chacune des deux parties de l'élément intermédiaire 3 est structurellement configurée pour interagir avec le boisseau 2 au niveau d'une moitié de la circonférence radiale du boisseau 2. Ainsi, les surfaces de contact 331 portées par une même partie de l'élément intermédiaire 3 interagissent avec une même moitié de la surface 221 du boisseau 2 par rapport à un plan passant par l'axe de pivotement du boisseau 2. Les deux parties de l'élément intermédiaire 3 réalisent ainsi deux moitiés d'une coquille qui, en section dans un plan perpendiculaire à l'axe du boisseau, entourent ce boisseau 2 en étant positionnées de part et d'autre de celui-ci. Selon la disposition des orifices 311, 321 traversants sur l'élément intermédiaire 3, la distribution des orifices 311, 321 traversants entre chacune des parties de l'élément intermédiaire 3 conduit à ce que les parties de l'élément intermédiaire 3 sont susceptibles de porter un seul, plusieurs ou éventuellement aucun des orifices 311, 321 traversants.

Selon un exemple correspondant à une variante de construction susceptible d'être combinée avec les différentes variantes précédemment détaillées, le sommet du relief 33 de la surface intérieure 32 d'au moins une partie de l'élément intermédiaire 3 définit une surface de contact 331 correspondant à au moins l'ensemble des points de l'intersection virtuelle entre, d'une part, un cylindre parallèle à l'axe de l'orifice 311, 321 traversant entouré par le relief 33 et, d'autre part, un cylindre circulaire dont l'axe est confondu avec l'axe du boisseau 2 et dont le rayon est inférieur ou égal au rayon du boisseau 2. Selon cette variante de construction, au niveau du contact entre la surface périphérique 221 du boisseau 2 et une surface de contact 331 portée par l'élément intermédiaire 3, les structures des surfaces 221, 331 qui interagissent entre elles sont arrangées pour que le contact entre elles soit maintenu dans le temps sous la forme d'une surface sensiblement annulaire et continue qui entoure l'orifice 311, 321 traversant de l'élément intermédiaire 3 et un orifice 211, 212 du boisseau 2. La réalisation d'une surface de contact 331 qui correspond à l'intersection entre un cylindre selon l'axe de l'orifice 311, 321 traversant de l'élément intermédiaire 3 et un cylindre circulaire dont l'axe et le rayon sont identiques à ceux du boisseau 2, permet d'opérer une parfaite complémentarité de forme entre le boisseau 2 et l'élément intermédiaire 3 de sorte que ces deux éléments sont facilement positionnables en appui l'un contre l'autre à l'intérieur du corps 1 de vanne au niveau de leurs surfaces en frottement. Toutefois, de façon préférée, la surface de contact 331 correspond à l'intersection entre un cylindre selon l'axe de l'orifice 311, 321 traversant de l'élément intermédiaire 3 et un cylindre circulaire dont l'axe est identique à celui du boisseau 2, mais dont le rayon est légèrement inférieur à celui du boisseau 2. Ainsi, cette différence de rayon correspond au positionnement d'une surface concave de rayon inférieur contre une surface convexe de rayon supérieur. La mise en contact de ces deux surfaces fait notamment intervenir une déformation de la surface de contact 331 portée par le relief 33 de l'élément intermédiaire 3 qui est compressée contre la surface périphérique 221 du boisseau 2. Par ailleurs, ces surfaces en appui l'une contre l'autre conduisent l'élément intermédiaire 3 et le boisseau 2 à se repousser. Ainsi, à l'intérieur du volume confiné du corps 1 de vanne, le positionnement du boisseau 2 contre la surface intérieure 32 de l'élément intermédiaire 3 entraine la transmission d'un effort en compression de l'élément intermédiaire 3 contre le joint d'étanchéité 4 et le corps 1 de vanne. Cet effort en compression se trouve ainsi amplifié par l'effort en écartement de l'élément intermédiaire 3 par rapport au boisseau 2 consécutif à la différence de rayon entre la surface de contact 331 de l'élément intermédiaire 3 et la surface périphérique 221 du boisseau 2.

Selon un exemple correspondant à une variante de construction susceptible d'être combinée avec les différentes variantes précédemment détaillées, la surface extérieure 31 d'au moins un élément intermédiaire 3 présente un profil de section complémentaire du profil de section du volume intérieur du corps 1 de vanne, de sorte que l'élément intermédiaire 3 est en mesure d'être positionné par translation dans le corps 1 de vanne. Une vanne comprenant les différentes particularités techniques de cette variante de construction et notamment lorsque cette complémentarité de profil en section est arrangée selon une longueur du volume intérieur du corps 1 de vanne, l'élément intermédiaire 3 est susceptible d'être positionné en insertion par translation du profil de section de l'élément intermédiaire 3 contre le profil de section complémentaire d'au moins une surface intérieure du corps 1 de vanne selon une longueur du corps 1 de vanne. Selon un exemple d'insertion de l'élément intermédiaire 3 dans le corps 1 de vanne, l'élément intermédiaire 3 est associé avec le boisseau 2 avant que l'ensemble réalisé par le boisseau 1 et l'élément intermédiaire 3 ne soit inséré par translation jusqu'à leur position à l'intérieur du corps 1 de vanne. De même, selon un exemple complémentaire, l'élément intermédiaire 3 est inséré dans le corps 1 de vanne en étant associé, d'une part, au boisseau 2 et, d'autre part, à au moins un joint d'étanchéité 4. Ainsi, lors de cette insertion, l'élément intermédiaire 3 se trouve directement positionné en compression entre le joint d'étanchéité et le boisseau 2 à l'intérieur du corps 1 de vanne.

Selon un exemple correspondant à une variante de construction susceptible d'être combinée avec les différentes variantes précédemment détaillées, l'élément intermédiaire 3 comprend au moins une partie structurellement configurée pour comprendre un corps principal dont la forme est similaire à une portion de tube cylindrique et dont la concavité est complémentaire à une portion périphérique de cylindre de section circulaire, de sorte que le relief 33 porté par la surface intérieure 32 présente une épaisseur continue sur la surface intérieure 32 de l'élément intermédiaire 3. Selon cette variante de réalisation, l'élément intermédiaire 3 présente un arrangement dont la surface intérieure 32 réalise une construction concave qui épouse sensiblement la convexité de la surface périphérique 221 du boisseau 2 sur au moins une partie du boisseau 2. Lorsque l'élément intermédiaire 3 est réalisé en plusieurs parties, ces différentes parties sont disposées autour du boisseau 2 pour l'entourer au niveau d'au moins un plan en section du boisseau 2. L'arrangement cylindrique de l'élément intermédiaire 3 permet de réaliser un positionnement de cet élément intermédiaire 3 dans le corps 1 de vanne par insertion selon l'axe du cylindre. Ce positionnement peut également être opéré conjointement avec celui du boisseau 2 lorsque les axes des cylindres de ces deux pièces sont sensiblement parallèles entre elles. Concernant la surface de contact 331 portée par le relief 33 dédié de l'élément intermédiaire 3, celle-ci présente un arrangement annulaire autour d'au moins un des orifices 311, 321 traversants de l'élément intermédiaire 3. Selon un exemple de réalisation, ce relief 33 prend la forme d'une ou plusieurs lignes d'épaississement de la surface intérieure 32. L'épaisseur de ce relief 33 est définie de façon à être suffisante pour maintenir un écartement entre la surface intérieure 32 de l'élément intermédiaire 3 et la surface périphérique 221 du boisseau 2, de sorte que seule la surface de contact 331 portée par le relief 33 frotte contre la surface du boisseau 2. Le relief 33 permet ainsi d'éviter que l'ensemble de la surface intérieure 32 concave ne frotte contre le boisseau 2 et donc impose un effort trop important pour mettre le boisseau 2 en rotation autour de son axe.

Selon un exemple correspondant à une variante de construction susceptible d'être combinée avec les différentes variantes précédemment détaillées, l'élément intermédiaire 3 comprend au moins une partie structurellement configurée pour comprendre un corps principal sensiblement plan dont la surface intérieure 32 comprend une portion d'un cylindre orienté selon un axe perpendiculaire au plan du corps principal et dont l'extrémité réalise une surface de contact 331 continue présentant une concavité destinée à être en appui contre la surface périphérique 221 du boisseau 2. Cette partie de l'élément intermédiaire 3 est ainsi arrangée pour être positionnée en vis-à-vis d'un orifice 121, 122 de communication du corps 1 de vanne, dans un plan sensiblement parallèle au plan de l'orifice 121, 122 de communication à l'intérieur du corps 1 de vanne. Selon un exemple de réalisation, le corps sensiblement plan de l'élément intermédiaire est arrangé pour être positionné dans un logement qui comprend au moins une rainure sur la face interne du corps 1 de vanne. L'insertion du corps principal d'une partie de l'élément intermédiaire 3 au niveau d'une rainure du corps 1 de vanne facilite son positionnement au cours de l'assemblage des différents éléments de la vanne de l'invention. La surface intérieure 32 de la partie de l'élément intermédiaire 3 comprend également un relief 33 réalisé par une portion de cylindre qui entoure un orifice traversant 311, 321 positionné sur la partie de l'élément intermédiaire 3 et dont l'axe de l'orifice traversant 311, 321 est perpendiculaire au plan du corps principal de cette partie de l'élément intermédiaire 3. Il convient de relever que, lorsque l'élément intermédiaire 3 est construit en plusieurs parties, chacune d'entre elle est susceptible d'être positionnée au niveau d'un orifice 121, 122 de communication respectif du corps 1 de vanne par coopération avec un logement respectif au niveau de la face intérieure du corps 1 de vanne. Les concavités réalisées par les surfaces de contact 311 des faces intérieures de chacune des parties de l'élément intermédiaire 3 sont arrangées pour coopérer de façon à définir le volume au niveau duquel le boisseau 2 est positionné pour pivoter axialement.

Selon un exemple correspondant à une variante de construction susceptible d'être combinée avec les différentes variantes précédemment détaillées, la surface extérieure 31 de l'élément intermédiaire 3 comprend au moins un logement 34 configuré pour le positionnement d'au moins une partie d'un joint d'étanchéité 4. Selon cet exemple de construction, le joint d'étanchéité 4 est associé à l'élément intermédiaire 3 au niveau d'un logement 34 qui présente une forme annulaire disposée autour d'un orifice 311, 321 traversant de l'élément intermédiaire 3. Selon un exemple de construction, ce logement 34 est réalisé sous la forme d'une rainure de largeur sensiblement identique à la largeur du joint d'étanchéité 4. Selon un exemple alternatif, la largeur du logement 34 est légèrement inférieure à la largeur du joint d'étanchéité 4 de sorte que le joint d'étanchéité 4 soit positionné en compression à l'intérieur du logement 34 selon un axe perpendiculaire à la rainure du logement 34. Cette compression du joint d'étanchéité 4 dans le logement 34 apporte une précontrainte qui permet une rigidification du joint 4 préalablement à sa compression dans le cadre du montage des différents éléments constitutifs de la vanne de l'invention.

Selon un exemple correspondant à une variante de construction susceptible d'être combinée avec les différentes variantes précédemment détaillées, le boisseau 2 cylindrique comprend, d'une part, une structure profonde 23 dont la surface périphérique 231 porte au moins un rainurage réalisant un circuit 21 de déplacement et, d'autre part, une structure de surface 22 dont la surface périphérique réalise la surface périphérique 221 du boisseau 2 et recouvre la surface périphérique 231 de la structure profonde 23 ; la structure de surface 22 comprenant au moins deux orifices 211, 212 traversant la structure de surface 22 configurés pour être aptes à être positionnés simultanément en vis-à-vis d'orifices 121, 122 de communication respectifs du corps 1 de vanne. Selon cet exemple de construction, la structure profonde 23 du boisseau 2 intègre un ou plusieurs rainurages disposés sur la surface 231 de cette structure profonde 23, voire combinés à des conduits au travers de cette structure profonde 23. Ces rainurages et ces conduits définissent un ou plusieurs circuits 21 reliés ou indépendants entre eux pour la circulation d'un fluide au travers du boisseau 2. La structure de surface 22 du boisseau 2 réalise une structure de recouvrement de la structure profonde 23 du boisseau 3 de sorte que les différents rainurages portés par la surface 231 de la structure profonde 23 soient cloisonnés et réalisent des conduits dont la surface intérieure est ainsi formée par la combinaison de la structure profonde 23 et de la structure de surface 22. La structure de surface 22 comprend plusieurs orifices 211, 212 qui traversent l'épaisseur de la structure de surface 22 entre, d'une part, la surface périphérique 221 du boisseau 22 et, d'autre part, le volume intérieur d'un rainurage ou d'un conduit de la structure profonde 23. Il convient de relever que la structure de surface 22 est susceptible de comprendre plusieurs groupes d'orifices 211, 212 traversants, de sorte que ces groupes sont configurés pour que, alternativement, les orifices 211, 212 traversants de ces groupes soient simultanément positionnés en vis-à-vis d'orifices 121, 122 de communication respectifs du corps 1 de vanne. Cette configuration permet de mettre en relation au travers du boisseau 2 des orifices 121, 122 de communication différents du corps 1 de vanne en fonction de positions de pivotement différentes du boisseau 2. Par ailleurs, selon un autre exemple de construction, les orifices 211, 212 traversants d'un même groupe sont arrangés pour coopérer avec un circuit 21 de déplacement particulier du boisseau 2. Ainsi, des groupes d'orifices 211, 212 traversants différents sont associés à des circuits 21 de déplacement respectifs du boisseau 2, de sorte que le pivotement axial du boisseau 2 permet de mettre en relation des orifices 121, 122 de communication différents du corps 1 de vanne par l'intermédiaire d'orifices 211, 212 traversants et des circuits 21 de déplacement différents du boisseau 2. Il convient également de relever que la surface de la structure de surface 22 en contact avec la structure profonde 23 est complémentaire de la surface périphérique 231 de la structure profonde 23 de façon à opérer une jonction étanche entre ces deux structures 22, 23 du boisseau 2. De même, la structure de surface 22 est disposée autour de la structure profonde 23, au moins au niveau de la portion rainurée de la structure profonde 23, de sorte que ces deux parties structurelles du boisseau 2 sont concentriques par rapport à l'axe de pivotement axial du boisseau 2.

Selon un exemple correspondant à une variante de construction susceptible d'être combinée avec la variante précédemment détaillée, la structure de surface 22 et la structure profonde 23 du boisseau 2 coopèrent par l'intermédiaire d'un moyen de guidage 24 en translation et de blocage en rotation de la structure de surface 22 par rapport à la structure profonde 23. Selon cet exemple de réalisation, la jonction entre le structure profonde 23 et la structure de surface 22 du boisseau 2 comprend une rainure portée par une première des deux structures 22, 23 et arrangée pour coopérer avec un élément de guidage en saillie porté par la seconde des deux structures 22, 23 du boisseau 2. A titre d'exemple, cette rainure est disposée selon un axe sensiblement parallèle à l'axe du boisseau 2, de sorte que l'assemblage de ces deux structures, profonde 23 et de surface 22, est effectué par insertion axiale de la structure profonde 23 dans la structure de surface 22 en opérant un coulissement de l'élément de guidage en saillie dans la rainure correspondante. A titre d'exemple alternatif, la rainure est disposée selon une spirale similaire au filet d'une vis. Les deux structures, profonde 23 et de surface 22, sont alors assemblées par vissage de la structure de surface 22 autour de la structure profonde 23. Une fois assemblées par vissage, les deux structures, profonde 23 et de surface 22, sont réunies sous la forme d'un ensemble bloqué en translation et rotation axiale, notamment lorsque le boisseau 2 est positionné à l'intérieur du corps 1 de vanne.

Selon un exemple correspondant à une variante de construction susceptible d'être combinée avec l'une des deux variantes précédemment détaillées, au moins un élément intermédiaire 3 et la surface périphérique 221 du boisseau 1 sont réalisés dans des matériaux plastiques identiques ou différents. En effet, dans le cadre de la vanne de l'invention, la jonction en frottement d'une surface de contact 331 de l'élément intermédiaire 3 contre la surface périphérique 221 du boisseau 2 fait ainsi intervenir un contact entre deux surfaces rigides, de sorte qu'aucun risque de déformation n'est à prévoir au cours du fonctionnement de la vanne à boisseau de l'invention. Aussi, les matériaux plastiques susceptibles d'être utilisés dans le cadre de la réalisation de l'élément intermédiaire 3 et/ou de la surface périphérique 221 du boisseau 1 sont des thermoplastiques de type polyamide ou PPS (polyphénylène sulfide), ou encore de l'EPDM ou du HNBR éventuellement couplés à un revêtement en PTFE afin d'optimiser le glissement des surfaces rigides de plastique en contact entre elles. Les matériaux thermoplastiques et thermodurcissables chargés en PTFE sont également préférés. De façon générale, les matériaux utilisés se doivent d'être compatibles avec les fluides, gaz ou liquides, dirigés au travers de la vanne de l'invention pour ne pas réagir avec eux.

Bien entendu, l'invention n'est pas limitée aux modes de réalisation décrits et/ou représentés aux dessins annexés.

## Revendications

1. Vanne à boisseau comprenant au moins :
- un corps (1) de vanne comprenant un volume intérieur (11) associé à au moins deux orifices (121, 122) de communication avec des conduits respectifs (13),
- un boisseau (2) cylindrique de section circulaire, le boisseau (2) comprenant au moins un circuit (21) traversant entre au moins deux orifices (211, 212) portés par la surface périphérique (221) du boisseau (2), au moins deux orifices (211, 212) du boisseau (2) étant disposés sur la surface périphérique (221) pour être aptes à être positionnés simultanément en vis-à-vis d'orifices (121, 122) de communication respectifs du corps (1) de vanne,
- un élément intermédiaire (3) comprenant au moins deux orifices (311, 321) traversants entre deux surfaces opposées, intérieure (32) et extérieure (31), les orifices (311, 321) traversants étant en vis-à-vis d'orifices (121, 122) de communication respectifs du corps (1) de vanne, la surface extérieure (31) de l'élément intermédiaire (3) étant configurée pour être positionnée en vis-à-vis du volume intérieur (11) du corps (1) de vanne, la surface intérieure (32) portant au moins un relief (33) entourant un orifice (321) traversant étant configurée de sorte que le sommet du relief (33) réalise autour de l'orifice (321) au moins une surface de contact (331) continue en appui contre la surface périphérique (221) du boisseau (2),
- un joint d'étanchéité (4) positionné en compression au niveau d'un orifice entre l'élément intermédiaire (3) et le corps (1) de vanne,
la vanne **caractérisée en ce que** le sommet du relief (33) de la surface intérieure (32) d'au moins une partie de l'élément intermédiaire (3) définit une surface de contact (331) correspondant à au moins l'ensemble des points de l'intersection virtuelle entre, d'une part, un cylindre parallèle à l'axe de l'orifice (311, 321) traversant entouré par le relief (33) et, d'autre part, un cylindre circulaire dont l'axe est confondu avec l'axe du boisseau (2) et dont le rayon est inférieur ou égal au rayon du boisseau (2).

2. Vanne à boisseau selon la revendication 1, **caractérisée en ce que** la vanne comprend un élément intermédiaire (3) structurellement réalisé en une ou plusieurs parties coopérant entre elles et configurées pour réaliser un arrangement qui entoure la surface périphérique (221) cylindrique du boisseau (2).

3. Vanne à boisseau selon la revendication 2, **caractérisée en ce que** la vanne comprend un élément intermédiaire (3) réalisé en deux parties arrangées de sorte que chacune des parties de l'élément intermédiaire (3) recouvre une moitié respective de la surface périphérique (221) cylindrique du boisseau (2).

4. Vanne à boisseau selon une des revendications précédentes, **caractérisée en ce que** la surface extérieure (31) d'au moins un élément intermédiaire (3) présente un profil de section complémentaire du profil de section du volume intérieur du corps (1) de vanne, de sorte que l'élément intermédiaire (3) est en mesure d'être positionné par translation dans le corps (1) de vanne.

5. Vanne à boisseau selon une des revendications 1 à 4, **caractérisée en ce que** l'élément intermédiaire (3) comprend au moins une partie structurellement configurée pour comprendre un corps principal dont la forme est similaire à une portion de tube cylindrique et dont la concavité est complémentaire à une portion périphérique de cylindre de section circulaire, de sorte que le relief (33) porté par la surface intérieure (32) présente une épaisseur continue sur la surface intérieure (32) de l'élément intermédiaire (3).

6. Vanne à boisseau selon une des revendications 1 à 4, **caractérisée en ce que** l'élément intermédiaire (3) comprend au moins une partie structurellement configurée pour comprendre un corps principal sensiblement plan dont la surface intérieure (32) comprend une portion d'un cylindre orienté selon un axe perpendiculaire au plan du corps principal et dont l'extrémité réalise la surface de contact (331) continue présentant une concavité destinée à être en appui contre la surface périphérique (221) du boisseau (2).

7. Vanne à boisseau selon une des revendications précédentes, **caractérisée en ce que** la surface extérieure (31) de l'élément intermédiaire (3) comprend au moins un logement (34) configuré pour le positionnement d'au moins une partie d'un joint d'étanchéité (4).

8. Vanne à boisseau selon une des revendications précédentes, **caractérisée en ce que** le boisseau (2) cylindrique comprend, d'une part, une structure profonde (23) dont la surface périphérique (231) porte au moins un rainurage réalisant un circuit (21) de déplacement et, d'autre part, une structure de surface (22) dont la surface périphérique réalise la surface périphérique (221) du boisseau (2) et recouvre la surface périphérique (231) de la structure profonde (23) ; la structure de surface (22) comprenant au moins deux orifices (211, 212) traversant la structure de surface (22) configurés pour être aptes à être positionnés simultanément en vis-à-vis d'orifices (121, 122) de communication respectifs du corps (1) de vanne.

9. Vanne à boisseau selon la revendication 8, **caractérisée en ce que** la structure de surface (22) et la structure profonde (23) du boisseau (2) coopèrent par l'intermédiaire d'un moyen de guidage (24) en translation et de blocage en rotation de la structure de surface (22) par rapport à la structure profonde (23).

10. Vanne à boisseau selon une des revendications précédentes, **caractérisée en ce que** au moins un élément intermédiaire (3) et la surface périphérique (221) du boisseau (1) sont réalisés dans des matériaux plastiques identiques ou différents.

## Patentansprüche

1. Kükenhahn, umfassend mindestens:
- einen Hahnkörper (1), der ein Innenvolumen (11) umfasst, das mindestens zwei Öffnungen (121, 122) zur Kommunikation mit jeweiligen Leitungen (13) zugeordnet ist,
- ein zylindrisches Küken (2) mit kreisförmigem Querschnitt, wobei das Küken (2) mindestens einen durchgehenden Kreislauf (21) zwischen mindestens zwei Öffnungen (211, 212) umfasst, die von der Umfangsfläche (221) des Kükens (2) getragen werden, wobei mindestens zwei Öffnungen (211, 212) des Kükens (2) an der Umfangsfläche (221) angeordnet sind, um in der Lage zu sein, gleichzeitig gegenüber von jeweiligen Kommunikationsöffnungen (121, 122) des Hahnkörpers (1) positioniert zu werden,
- ein Zwischenelement (3), das mindestens zwei durchgehende Öffnungen (311, 321) zwischen zwei entgegengesetzten Flächen, einer inneren (32) und eine äußeren (31), umfasst, wobei die durchgehenden Öffnungen (311, 321) gegenüber von jeweiligen Kommunikationsöffnungen (121, 122) des Hahnkörpers (1) sind, wobei die äußere Fläche (31) des Zwischenelements (3) dazu ausgestaltet ist, gegenüber dem Innenvolumen (11) des Hahnkörpers (1) positioniert zu werden, wobei die innere Fläche (32), die mindestens ein Relief (33) trägt, das eine durchgehende Öffnung (321) umgibt, so ausgestaltet ist, dass die Spitze des Reliefs (33) um die Öffnung (321) herum mindestens eine durchgehende Kontaktfläche (331) in Anlage an der Umfangsfläche (221) des Kükens (2) bildet,
- eine Dichtung (4), die zusammengedrückt an einer Öffnung zwischen dem Zwischenelement (3) und dem Hahnkörper (1) positioniert ist,
wobei der Hahn **dadurch gekennzeichnet ist, dass** die Spitze des Reliefs (33) der inneren Fläche (32) von mindestens
einem Teil des Zwischenelements (3) eine Kontaktfläche (331) definiert, die mindestens der Gesamtheit der Punkte der virtuellen Schnittlinie zwischen, zum einen, einem Zylinder, der parallel zu der Achse der durchgehenden Öffnung (311, 321) verläuft, die von dem Relief (33) umgeben ist, und, zum anderen, einem kreisförmigen Zylinder, dessen Achse mit der Achse des Kükens (2) zusammenfällt ist und dessen Radius kleiner oder gleich dem Radius des Kükens (2) ist, entspricht.

2. Kükenhahn nach Anspruch 1, **dadurch gekennzeichnet, dass** der Hahn ein Zwischenelement (3) umfasst, das strukturell aus einem oder mehreren Teilen gebildet ist, die untereinander zusammenwirken und dazu ausgestaltet sind, eine Anordnung zu bilden, die die zylindrische Umfangsfläche (221) des Kükens (2) umgibt.

3. Kükenhahn nach Anspruch 2, **dadurch gekennzeichnet, dass** der Hahn ein Zwischenelement (3) umfasst, das aus zwei Teilen gebildet ist, die so angeordnet sind, dass jedes der Teile des Zwischenelements (3) eine jeweilige Hälfte der zylindrischen Umfangsfläche (221) des Kükens (2) bedeckt.

4. Kükenhahn nach einem der vorhergehenden Ansprüche, **dadurch gekennzeichnet, dass** die äußere Fläche (31) mindestens eines Zwischenelements (3) ein Profil mit einem zu dem Querschnittprofil des Innenvolumens des Hahnkörpers (1) komplementären Querschnitt aufweist, so dass das Zwischenelement (3) in der Lage ist, in dem Hahnkörper (1) translatorisch positioniert zu werden.

5. Kükenhahn nach einem der Ansprüche 1 bis 4, **dadurch gekennzeichnet, dass** das Zwischenelement (3) mindestens einen Teil umfasst, der strukturell dazu ausgestaltet ist, einen Hauptkörper zu umfassen, dessen Form einem zylindrischen Rohrabschnitt ähnlich ist und dessen Konkavität komplementär zu einem Umfangsabschnitt eines Zylinders mit kreisförmigem Querschnitt ist, so dass das Relief (33), das von der inneren Fläche (32) getragen wird, eine kontinuierliche Dicke auf der inneren Fläche (32) des Zwischenelements (3) aufweist.

6. Kükenhahn nach einem der Ansprüche 1 bis 4, **dadurch gekennzeichnet, dass** das Zwischenelement (3) mindestens einen Teil umfasst, der strukturell dazu ausgestaltet ist, einen im Wesentlichen planen Hauptkörper zu umfassen, dessen innere Fläche (32) einen Abschnitt eines Zylinders umfasst, der entlang einer zu der Ebene des Hauptkörpers senkrecht verlaufenden Achse ausgerichtet ist und dessen Ende die durchgehende Kontaktfläche (331) bildet, die eine Konkavität aufweist, die dazu bestimmt ist, in Anlage an der Umfangsfläche (221) des Kükens (2) zu sein.

7. Kükenhahn nach einem der vorhergehenden Ansprüche, **dadurch gekennzeichnet, dass** die äußere Fläche (31) des Zwischenelements (3) mindestens eine Aufnahme (34) umfasst, die zur Positionierung mindestens eines Teils einer Dichtung (4) ausgestaltet ist.

8. Kükenhahn nach einem der vorhergehenden Ansprüche, **dadurch gekennzeichnet, dass** das zylindrische Küken (2) zum einen eine tiefe Struktur (23) umfasst, deren Umfangsfläche (231) mindestens eine Rillung trägt, die einen Verlagerungskreislauf (21) bildet, und zum anderen eine oberflächliche Struktur (22), deren Umfangsfläche die Umfangsfläche (221) des Kükens (2) bildet und die Umfangsfläche (231) der tiefen Struktur (23) bedeckt, wobei die oberflächliche Struktur (22) mindestens zwei durch die oberflächliche Struktur (22) durchgehende Öffnungen (211, 212) umfasst, die dazu ausgestaltet sind, in der Lage zu sein, gleichzeitig gegenüber von jeweiligen Kommunikationsöffnungen (121, 122) des Hahnkörpers (1) positioniert zu werden.

9. Kükenhahn nach Anspruch 8, **dadurch gekennzeichnet, dass** die oberflächliche Struktur (22) und die tiefe Struktur (23) des Kükens (2) über ein Führungsmittel (24) mit Translation und Verdrehsicherung der oberflächlichen Struktur (22) in Bezug auf die tiefe Struktur (23) zusammenwirken.

10. Kükenhahn nach einem der vorhergehenden Ansprüche, **dadurch gekennzeichnet, dass** mindestens ein Zwischenelement (3) und die Umfangsfläche (221) des Kükens (1) aus gleichen oder unterschiedlichen Kunsstoffmaterialien gebildet sind.

## Claims

1. Plug valve comprising at least:
- a valve body (1) comprising an internal volume (11) associated with at least two communication orifices (121, 122) in communication with respective conduits (13),
- a cylindrical plug (2) of circular section, the plug (2) comprising at least one circuit (21) passing between at least two orifices (211, 212) in the peripheral surface (221) of the plug (2), at least two orifices (211, 212) of the plug (2) being arranged on the peripheral surface (221) to enable said orifices to be positioned simultaneously opposite respective communication orifices (121, 122) of the valve body (1),
- an intermediate element (3) comprising at least two through-orifices (311, 321) between two opposing surfaces, specifically an inner surface (32) and an outer surface (31), the through-orifices (311, 321) being arranged opposite respective communication orifices (121, 122) of the valve body (1), the outer surface (31) of the intermediate element (3) being designed to be positioned opposite the internal volume (11) of the valve body (1), the inner surface (32) bearing at least one relief (33) surrounding a through-orifice (321) being designed so that the top of the relief (33) forms about the orifice (321) at least one continuous contact surface (331) bearing against the peripheral surface (221) of the plug (2),
- a gasket (4) positioned in compression on an orifice between the intermediate element (3) and the valve body (1),
the valve **characterized in that**
the top of the relief (33) of the inner surface (32) of at least
a part of the intermediate element (3) defines a contact surface (331) corresponding to at least all of the points of the virtual intersection between, on one hand, a cylinder parallel to the axis of the through-orifice (311, 321) surrounded by the relief (33) and, on the other hand, a circular cylinder of which the axis coincides with the axis of the plug (2) and of which the radius is less than or equal to the radius of the plug (2).

2. Plug valve according to Claim 1, **characterized in that** the valve comprises an intermediate element (3) structurally made of one or more parts cooperating with one another and designed to form an arrangement that surrounds the cylindrical peripheral surface (221) of the plug (2).

3. Plug valve according to Claim 2, **characterized in that** the valve comprises an intermediate element (3) made of two parts arranged so that each of the parts of the intermediate element (3) covers a respective half of the cylindrical peripheral surface (221) of the plug (2).

4. Plug valve according to one of the preceding claims, **characterized in that** the section profile of the outer surface (31) of at least one intermediate element (3) matches the section profile of the internal volume of the valve body (1), enabling the intermediate element (3) to be positioned by translation in the valve body (1).

5. Plug valve according to one of Claims 1 to 4, **characterized in that** the intermediate element (3) comprises at least one part structurally designed to comprise a main body having a shape similar to a cylindrical tube portion and a concavity matching a peripheral portion of a cylinder of circular section, so that the relief (33) on the inner surface (32) has a continuous thickness on the inner surface (32) of the intermediate element (3).

6. Plug valve according to one of Claims 1 to 4, **characterized in that** the intermediate element (3) comprises at least one part structurally designed to comprise a substantially flat main body of which the inner surface (32) comprises a portion of a cylinder oriented along an axis perpendicular to the plane of the main body and of which the end forms the continuous contact surface (331) having a concavity intended to bear against the peripheral surface (221) of the plug (2).

7. Plug valve according to one of the preceding claims, **characterized in that** the outer surface (31) of the intermediate element (3) comprises at least one seat (34) designed to position at least a part of a gasket (4).

8. Plug valve according to one of the preceding claims, **characterized in that** the cylindrical plug (2) comprises, on one hand, a deep structure (23) of which the peripheral surface (231) has at least one slot forming a displacement circuit (21) and, on the other hand, a surface structure (22) of which the peripheral surface forms the peripheral surface (221) of the plug (2) and covers the peripheral surface (231) of the deep structure (23); the surface structure (22) comprising at least two orifices (211, 212) through the surface structure (22) that are designed to be positioned simultaneously opposite respective communication orifices (121, 122) of the valve body (1).

9. Plug valve according to Claim 8, **characterized in that** the surface structure (22) and the deep structure (23) of the plug (2) cooperate via means (24) for guiding the translation and constraining the rotation of the surface structure (22) in relation to the deep structure (23).

10. Plug valve according to one of the preceding claims, **characterized in that** at least one intermediate element (3) and the peripheral surface (221) of the plug (1) are made of the same or different plastic materials.
